(19) Europäisches Patentamt
European Patent Office
Office européen des brevets

(11) **EP 4 657 492 A2**

(12) **EUROPEAN PATENT APPLICATION**

(43) Date of publication:
**03.12.2025 Bulletin 2025/49**

(21) Application number: **25179737.9**

(22) Date of filing: **29.05.2025**

(51) International Patent Classification (IPC):
**H01J 49/00** *(2006.01)* **G01N 30/72** *(2006.01)*

(52) Cooperative Patent Classification (CPC):
**H01J 49/0031; G01N 30/72**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.05.2024 US 202418679001**

(71) Applicant: **Thermo Finnigan LLC**
**San Jose, CA 95134 (US)**

(72) Inventor: **REMES, Philip M.**
**Dublin (US)**

(74) Representative: **Boult Wade Tennant LLP**
**Salisbury Square House**
**8 Salisbury Square**
**London EC4Y 8AP (GB)**

(54) **OPTIMIZATION OF ACQUISITION WINDOW WIDTH FOR TARGETED MASS SPECTROMETRY**

(57) An acquisition schedule for a targeted assay of a sample is generated. The acquisition schedule schedules acquisition, by a mass spectrometer during an acquisition window having a dynamic acquisition window width, of a set of mass spectra for each target analyte included in a set of target analytes included in the sample as the target analytes elute from a separation system. Generating the acquisition schedule includes determining the dynamic acquisition window width based on an acquisition cycle period for the targeted assay. The mass spectrometer is directed to acquire each set of mass spectra in accordance with the acquisition schedule.

Fig. 7

**Description**

BACKGROUND INFORMATION

A mass spectrometer may be used to detect, identify, and/or quantify molecules based on the mass-to-charge ratio (m/z) of ions produced from the molecules. A mass spectrometer generally includes an ion source for producing ions from molecules included in a sample, a mass analyzer for separating the ions based on their m/z, and an ion detector for detecting the separated ions. The mass spectrometer may include or be connected to a computer-based software platform that uses data from the ion detector to construct a mass spectrum that shows a relative abundance of each of the detected ions as a function of m/z. The mass spectrum may be used to detect and quantify molecules in simple and complex mixtures. In some configurations, a separation system, such as a liquid chromatograph (LC), gas chromatograph (GC), or capillary electrophoresis (CE) system, is coupled to the mass spectrometer in a combined system (e.g., LC-MS, GC-MS, or CE-MS system) to separate analytes in the sample before the analytes are introduced to the mass spectrometer.

One application of mass spectrometry is the identification, quantification, and structural elucidation of peptides, proteins, and related molecules in complex biological samples. In some such experiments, often referred to as multi-stage mass spectrometry (MSn where n is 2 or more) or tandem mass spectrometry (MS/MS or MS2 (n=2)), certain ions (referred to as precursor ions) are isolated and fragmented in a controlled manner to yield product ions. A mass analysis is then performed on the product ions to generate mass spectra of the product ions. The mass spectra of the product ions provide information that may be used to confirm identification, determine quantity, and/or derive structural details regarding analytes of interest.

Various techniques may be used to acquire mass spectra using multi-stage mass spectrometry or tandem mass spectrometry. One commonly used technique is data-dependent acquisition (DDA), which uses data acquired in one mass analysis to select, based on predetermined criteria, one or more ion species or a narrow m/z range for isolation and fragmentation. For example, the mass spectrometer may perform a full MS survey scan of precursor ions over a wide precursor m/z range and select, based on the MS survey scan, one or more precursor ion species from the resulting mass spectra for isolation, fragmentation, and mass analysis. The criteria for selection of precursor ion species may include, for example, intensity, charge state, m/z, inclusion/exclusion lists, or isotopic patterns. The main disadvantage of the DDA technique is the inherently random nature of the results. When technical replicates of the same sample or comparative analysis on other samples is performed, some analytes may be measured in one experiment but not in others. This frustrates attempts to perform reproducible analyses and is known as the "missing value problem".

In contrast to DDA, data-independent acquisition (DIA) is a technique in which all precursor ion species within a wide precursor m/z range (e.g., 600 - 900 m/z) are isolated and fragmented via a sequentially advancing isolation window of a fixed m/z width (e.g., 20 m/z) to generate product ions. A mass analysis is then performed on the product ions in a methodical and unbiased manner. The isolation of precursor ions across the full precursor m/z range, fragmentation of the isolated precursor ions, and mass analysis of the product ions constitutes one acquisition cycle, which is repeated to generate mass spectra of the product ions. In the DIA technique, isolation and fragmentation of one or more precursor ion species is not dependent on data acquired in a survey mass analysis, as in DDA, and is much more suitable for comparing results across different samples than DDA because the DIA technique does not suffer from the missing values problem.

In contrast to DDA and DIA, targeted mass spectrometry is a technique in which a mass analysis is performed for a fixed, known list of analytes included in a sample. Targeted mass spectrometry experiments are designed to gather quantitative information about a set of analytes, the identity of which are known before the experiment starts. Generally, the sample is introduced to the separation system (e.g., an LC system), which separates analytes and introduces the analytes to the mass spectrometer as the analytes elute from the separation system. Given some knowledge about the analytes' expected elution times from the separation system, an acquisition schedule can be created that specifies which analytes the mass spectrometer will target for mass analysis at which time during the experiment. Analytes that are part of such targeted assays are often referred to as "targets" or "target analytes". During the experiment, when the elapsed time is a value between a target's elution start and stop times, the target is said to be "active". This helps utilize the instrument resources more efficiently than if mass spectra were acquired continuously for every target in the assay.

However, due to time dependent variations in the separation system, such as solvent composition and condition of the stationary phase in LC systems, analyte elution times can change, a phenomenon that is referred to as retention time shift or elution time drift. Various techniques have been developed to adjust scheduled acquisition windows in real-time to adjust for elution time drift. Conventional techniques for elution time drift correction use data acquired during an experiment to adjust, in real-time, the acquisition schedule. However, such techniques can be negatively affected during periods of low analyte concentration, which may produce poor and/or insufficient data for elution time drift correction.

## SUMMARY

The following description presents a simplified summary of one or more aspects of the methods and systems described herein to provide a basic understanding of such aspects. This summary is not an extensive overview of all contemplated aspects and is intended to neither identify key or critical elements of all aspects nor delineate the scope of any or all aspects. Its sole purpose is to present some concepts of one or more aspects of the methods and systems described herein in a simplified form as a prelude to the more detailed description that is presented below.

In some illustrative examples, a non-transitory computer-readable medium stores instructions that, when executed, direct at least one processor of a computing device for mass spectrometry to: generate, for a targeted assay of a sample, an acquisition schedule that schedules acquisition, by a mass spectrometer during an acquisition window having a dynamic acquisition window width, of a set of mass spectra for each target analyte included in a set of target analytes included in the sample as the target analytes elute from a separation system, wherein generating the acquisition schedule includes determining the dynamic acquisition window width based on an acquisition cycle period for the targeted assay; and direct the mass spectrometer to acquire each set of mass spectra in accordance with the acquisition schedule.

In some illustrative examples, a method of performing targeted mass spectrometry comprises: generating, for a targeted assay of a sample, an acquisition schedule that schedules acquisition, by a mass spectrometer during an acquisition window having a dynamic acquisition window width, of a set of mass spectra for each target analyte included in a set of target analytes included in the sample as the target analytes elute from a separation system, wherein generating the acquisition schedule includes determining the dynamic acquisition window width based on an acquisition cycle period for the targeted assay; and directing the mass spectrometer to acquire each set of mass spectra in accordance with the acquisition schedule.

In some illustrative examples, a system for mass spectrometry comprises: one or more processors; and memory storing executable instructions that, when executed by the one or more processors, cause a computing device to: generate, for a targeted assay of a sample, an acquisition schedule that schedules acquisition, by a mass spectrometer during an acquisition window having a dynamic acquisition window width, of a set of mass spectra for each target analyte included in a set of target analytes included in the sample as the target analytes elute from a separation system, wherein generating the acquisition schedule includes determining the dynamic acquisition window width based on an acquisition cycle period for the targeted assay; and direct the mass spectrometer to acquire each set of mass spectra in accordance with the acquisition schedule.

## BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.

FIG. 1 shows a functional diagram of an illustrative LC-MS system.

FIG. 2 shows a functional diagram of an illustrative implementation of a mass spectrometer included in the LC-MS system of FIG 1.

FIG. 3A shows a portion of an illustrative elution profile of a selected m/z.

FIG. 3B shows a frequency domain representation of the elution profile of FIG 3A.

FIG. 4 shows three illustrative heat maps that represent a cross-correlation of real-time mass spectra data with reference mass spectra data for three different experiments performed in close succession for a set of 2,972 target peptides.

FIG. 5 shows a graph that plots the number of concurrent precursor ions as a function of time and a graph that plots the instrument time required to mass analyze all concurrent precursor ions during an acquisition cycle for the targeted assay of FIG. 4.

FIG. 6 shows a functional diagram of an illustrative targeted MS control system.

FIG. 7 shows an illustrative method of performing targeted mass spectrometry with optimized acquisition window widths.

FIG. 8 shows an illustrative method of determining a dynamic acquisition window width.

FIG. 9 shows another illustrative method of determining a dynamic acquisition window width.

FIG. 10 shows another illustrative method of determining a dynamic acquisition window width.

FIG. 11 shows a graph that plots instrument time as a function of elapsed time and a graph that plots acquisition window width as a function of elapsed time, for both a constant acquisition window width and a dynamic acquisition window width.

FIG. 12 shows an illustrative computing device.

## DETAILED DESCRIPTION

Systems and methods of performing targeted mass spectrometry with improved acquisition scheduling and optimized acquisition window widths are described herein. The acquisition window width for a targeted assay is optimized by using a dynamic acquisition window width (e.g., a time-dependent or time-varying acquisition window width) that is determined based on the acquisition cycle period for the assay. A dynamic acquisition window width that is based on the acquisition cycle period compensates for variations in elution time drift during periods of low analyte concentration while ensuring that the instrument time required to mass analyze all active targets at any given time during an assay does not exceed the acquisition cycle period for the assay. Compared to a constant acquisition window width, a dynamic acquisition window width improves elution time drift correction without sacrificing data quality or target analyte throughput.

Various examples will now be described in more detail with reference to the figures. The systems and methods described herein may provide one or more of the benefits mentioned above and/or various additional and/or alternative benefits that will be made apparent herein.

Targeted mass spectrometry with improved acquisition scheduling and optimized acquisition window widths is performed with a combined separation-mass spectrometry system, such as an LC-MS system. Accordingly, an LC-MS system will now be described. The described LC-MS system is illustrative and not limiting. The methods and systems described herein may operate as part of or in conjunction with the LC-MS system described herein and/or with any other suitable separation-mass spectrometry system, such as a high-performance liquid chromatography-mass spectrometry (HPLC-MS) system, a gas chromatography-mass spectrometry (GC-MS) system, or a capillary electrophoresis-mass spectrometry (CE-MS) system. The methods and systems described herein may also operate in conjunction with any other continuous flow sample source, such as a flow-injection mass spectrometry system (FI-MS) in which analytes are injected into a mobile phase (without separation in a column) and enter the mass spectrometer with time-dependent variations in intensity (e.g., Gaussian-like peaks).

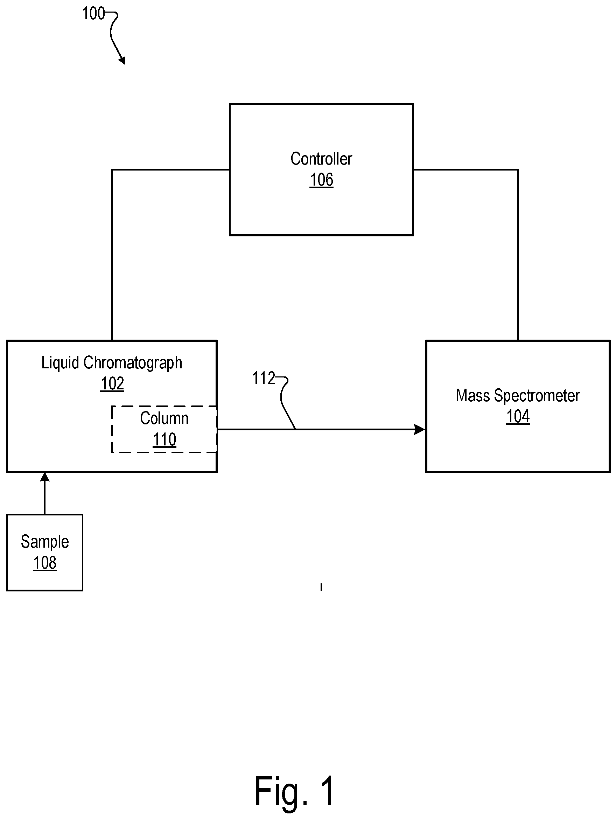

FIG. 1 shows a functional diagram of an illustrative LC-MS system 100. LC-MS system 100 includes a liquid chromatograph 102, a mass spectrometer 104, and a controller 106. Liquid chromatograph 102 is configured to separate, over time, analytes within a sample 108 that is injected into liquid chromatograph 102. Sample 108 may include, for example, chemical analytes (e.g., molecules, ions, etc.) and/or biological analytes (e.g., metabolites, proteins, peptides, lipids, etc.) for detection and analysis by LC-MS system 100. Liquid chromatograph 102 may be implemented by any liquid chromatograph as may suit a particular implementation. In liquid chromatograph 102, sample 108 is injected into a mobile phase (e.g., a solvent), which carries sample 108 through a column 110 containing a stationary phase (e.g., an adsorbent packing material). As the mobile phase passes through column 110, analytes within sample 108 elute from column 110 at different times based on, for example, their size, affinity to the stationary phase, polarity, and/or hydrophobicity.

A detector (e.g., an ion detector component of mass spectrometer 104, an ion-electron converter and electron multiplier, etc.) may measure the relative intensity of a signal modulated by separated analytes in eluate 112 from column 110. Data generated by the detector may be represented as a chromatogram, which plots retention time on the x-axis and a signal representative of the relative intensity on the y-axis. The retention time of an analyte is generally measured as the period of time between injection of sample 108 into the mobile phase and the relative intensity peak maximum after chromatographic separation. In some examples, the relative intensity may be correlated to or representative of relative abundance of the separated analytes. Data generated by liquid chromatograph 102 is output to controller 106.

In some cases, particularly in analyses of complex mixtures, multiple different analytes in sample 108 co-elute from column 110 at approximately the same time, and thus may have the same or similar retention times. As a result, determination of the relative intensity of the individual analytes within sample 108 requires further separation of signals attributable to the individual analytes. To this end, liquid chromatograph 102 directs analytes included in eluate 112 to mass spectrometer 104 for further separation, identification, and/or quantification of the analytes.

Mass spectrometer 104 produces ions from the analytes received from liquid chromatograph 102 and sorts or separates the produced ions based on m/z of the ions. Mass spectrometer 104 may be implemented by a multi-stage mass spectrometer configured to perform multi-stage mass spectrometry (also denoted MSn where n is 2 or more) or a tandem mass spectrometer configured to perform tandem mass spectrometry (a form of multi-stage mass spectrometry denoted MS/MS or MS2 (where n is 2)). A detector in mass spectrometer 104 measures the intensity of the signal produced by the ions. As used herein, "intensity" or "signal intensity" refers to the response of the detector and may represent absolute abundance, relative abundance, ion count, intensity, relative intensity, ion current, or any other suitable measure of ion detection. Data acquired by mass spectrometer 104 is output to controller 106. Data generated by the detector may be represented by mass spectra, which plot the intensity of the observed signal as a function of m/z of the detected ions.

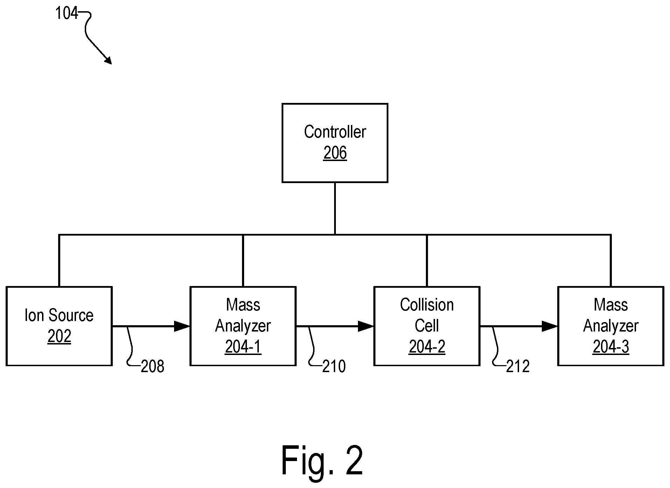

FIG. 2 shows a functional diagram of an illustrative implementation of mass spectrometer 104. Mass spectrometer 104 includes an ion source 202, a first mass analyzer 204-1, a collision cell 204-2, a second mass analyzer 204-3, and a controller 206. Mass spectrometer 104 may further include any additional or alternative components not shown as may suit a particular implementation (e.g., ion optics, filters, ion stores, an autosampler, a detector, etc.).

Ion source 202 produces a stream 208 of ions from the analytes received from column 110 and deliver the ions to first mass analyzer 204-1. Ion source 202 may use any suitable ionization technique, including without limitation electron ionization, chemical ionization, matrix assisted laser desorption/ionization, electrospray ionization, atmospheric pressure chemical ionization, atmospheric pressure photoionization, inductively coupled plasma, and the like. Ion source 202 may include various components for producing ions from analytes included in sample 108 and delivering the ions to first mass analyzer 204-1.

First mass analyzer 204-1 receives ion stream 208, isolates precursor ions of a selected m/z range, and delivers a beam 210 of the precursor ions to collision cell 204-2. Collision cell 204-2 receives beam 210 of precursor ions and produces product ions (e.g., fragment ions) via controlled dissociation processes. Collision cell 204-2 directs a beam 212 of product ions to second mass analyzer 204-3. Second mass analyzer 204-3 filters and/or performs a mass analysis of the product ions.

Mass analyzers 204-1 and 204-3 isolate or separate ions according to m/z of each of the ions. Mass analyzers 204-1 and 204-3 may be implemented by any suitable mass analyzer, such as a quadrupole mass filter, an ion trap (e.g., a three-dimensional quadrupole ion trap, a cylindrical ion trap, a linear quadrupole ion trap, a toroidal ion trap, etc.), a time-of-flight (TOF) mass analyzer, an electrostatic trap mass analyzer (e.g. an orbital electrostatic trap such as an Orbitrap mass analyzer, a Kingdon trap, etc.), a Fourier transform ion cyclotron resonance (FT-ICR) mass analyzer, and the like. Mass analyzers 204-1 and 204-3 need not be implemented by the same type of mass analyzer.

Collision cell 204-2 may be implemented by any suitable collision cell. As used herein, "collision cell" may encompass any structure or device configured to produce product ions via controlled dissociation processes and is not limited to devices employed for collisionally-activated dissociation. For example, collision cell 204-2 may be configured to fragment precursor ions using collision induced dissociation, electron transfer dissociation, electron capture dissociation, photo induced dissociation, surface induced dissociation, ion/molecule reactions, and the like.

An ion detector (not shown) detects ions at each of a variety of different m/z and responsively generates an electrical signal representative of ion intensity. The electrical signal is transmitted to controller 206 for processing, such as to construct a mass spectrum of the analyzed ions. For example, mass analyzer 204-3 may emit an emission beam of separated ions to the ion detector, which is configured to detect the ions in the emission beam and generate or provide data that can be used by controller 206 to construct a mass spectrum. The ion detector may be implemented by any suitable detection device, including without limitation an electron multiplier, a Faraday cup, and the like. In other examples, such as when second mass analyzer 204-3 is implemented by an orbital electrostatic trap mass analyzer, second mass analyzer 204-3 functions as both a mass analyzer and a detector.

Controller 206 is communicatively coupled with, and configured to control operations of, mass spectrometer 104. For example, controller 206 may be configured to control operation of various hardware components included in ion source 202 and/or mass analyzers 204-1 and 204-3. To illustrate, controller 206 may be configured to control an accumulation time of ion source 202 and/or mass analyzers 204, control an oscillatory voltage power supply and/or a DC power supply to supply an RF voltage and/or a DC voltage to mass analyzers 204, adjust values of the RF voltage and DC voltage to select an effective m/z (including a mass tolerance window) for analysis, and adjust the sensitivity of the ion detector (e.g., by adjusting the detector gain).

Controller 206 may include any suitable hardware (e.g., a processor, circuitry, etc.) and/or software as may serve a particular implementation. While FIG. 2 shows that controller 206 is included in mass spectrometer 104, controller 206 may alternatively be implemented in whole or in part separately from mass spectrometer 104, such as by a computing device communicatively coupled to mass spectrometer 104 by way of a wired connection (e.g., a cable) and/or a network (e.g., a local area network, a wireless network (e.g., Wi-Fi), a wide area network, the Internet, a cellular data network, etc.). In some examples, controller 206 is implemented in whole or in part by controller 106.

In the example of FIG. 2, mass spectrometer 104 is tandem-in-space (e.g., has multiple mass analyzers) and has two stages for performing tandem mass spectrometry. However, mass spectrometer 104 is not limited to this configuration but may have any other suitable configuration. For example, mass spectrometer 104 may be tandem-in-time. Additionally or alternatively, mass spectrometer 104 may be a multi-stage mass spectrometer and may have any suitable number of mass analyzers and stages (e.g., three or more) for performing multi-stage tandem mass spectrometry (e.g., MS/MS/MS).

Referring again to FIG. 1, controller 106 is communicatively coupled with, and configured to control operations of, LC-MS system 100 (e.g., liquid chromatograph 102 and mass spectrometer 104). Controller 106 may include any suitable hardware (e.g., a processor, circuitry, etc.) and/or software configured to control operations of and/or interface with the various components of LC-MS system 100 (e.g., liquid chromatograph 102 or mass spectrometer 104).

Controller 106 and/or controller 206 may also include and/or provide a user interface configured to enable user interaction with LC-MS system 100 or mass spectrometer 104. The user may interact with controller 106 and/or controller 206 via the user interface by tactile, visual, auditory, and/or other sensory type communication. For example, the user interface may include a display device (e.g., liquid crystal display (LCD) display screen, a touch screen, etc.) for displaying information (e.g., mass spectra, notifications, etc.) to the user. The user interface may also include an input device (e.g., a keyboard, a mouse, a touchscreen device, etc.) that allows the user to provide input to controller 106 and/or controller 206. In other examples, the display device and/or input device may be separate from, but communicatively coupled to, controller 106 and/or controller 206. For instance, the display device and the input device may be included in a computer (e.g., a desktop computer, a laptop computer, etc.) communicatively connected to controller 106 and/or controller 206 by way of a wired connection (e.g., by one or more cables) and/or a wireless connection.

Controller 106 acquires data acquired over time by LC-MS system 100. The data may include a series of mass spectra including intensity values of ions produced from the analytes of sample 108 as a function of m/z of the ions. The series of mass spectra may be represented in a three-dimensional map in which elution time (e.g., retention time) is plotted along an X-axis of the map, m/z is plotted along a Y-axis of the map, and intensity is plotted along a Z-axis of the map. Spectral features on the map (e.g., Z-axis peaks of intensity) represent detection by LC-MS system 100 of ions produced from various analytes included in sample 108. The X-axis and Z-axis of the map may be used to generate an elution profile (e.g., a mass chromatogram) that plots detected intensity as a function of time for a selected m/z.

As used herein, a "selected m/z" refers to a specific m/z, with or without a mass tolerance window (e.g., +/- 0.5 m/z), or a narrow range of m/z (e.g., an isolation window with a width or range such as 20 m/z, 10 m/z, 4 m/z, 3 m/z, etc.). In a targeted MS2 or MSn analysis, such as a selected reaction monitoring (SRM) analysis, a multiple reaction monitoring (MRM) analysis, or a parallel reaction monitoring (PRM) analysis, the selected m/z corresponds to the m/z of the product ion of a distinct transition (precursor ion/product ion pair), and the recorded intensity as a function of time vector (e.g., trace) represents the elution profile for the distinct transition. The Y-axis and Z-axis of the map may be used to generate mass spectra, each mass spectrum plotting intensity as a function of m/z for a particular acquisition.

As mentioned, targeted mass spectrometry experiments are designed to gather quantitative information about a set of analytes, the identity of which are known before the experiment starts. The quantity of an analyte may be determined by integrating the area under its elution peak. In some examples, quantitation of the analyte includes summing the detected signal for multiple different selected m/z for product ions that are characteristic of the analyte of interest and integrating the area under the summed signal. For example, an analyte of interest may have multiple characteristic transitions, each of which may be summed to form an elution profile with an increased signal to noise ratio. Thus, as used herein, "selected m/z" may also be a combination of multiple distinct m/z or m/z ranges. For example, the selected m/z for an analyte of interest may be the combination of multiple distinct m/z or m/z ranges for each ion characteristic of the analyte of interest, and the elution profile for the selected m/z may be the summed signal of each distinct m/z or m/z range. In further examples, the multiple distinct m/z or m/z ranges span the full m/z spectrum, wherein the elution profile is a total ion current (TIC).

As used herein, an "acquisition" refers to a mass analysis performed at a discrete point in time to acquire a single mass spectrum across an m/z range of interest (e.g., a selected m/z). It will be recognized that, in some targeted MS2 analyses, true "spectra" are not acquired in that the detected intensity as a function of time is acquired or recorded for only a selected m/z and not for a broad m/z spectrum. Nevertheless, for ease of discussion herein, the recorded intensity vs. time vector for such targeted MS2 analyses is referred to herein as a mass spectrum.

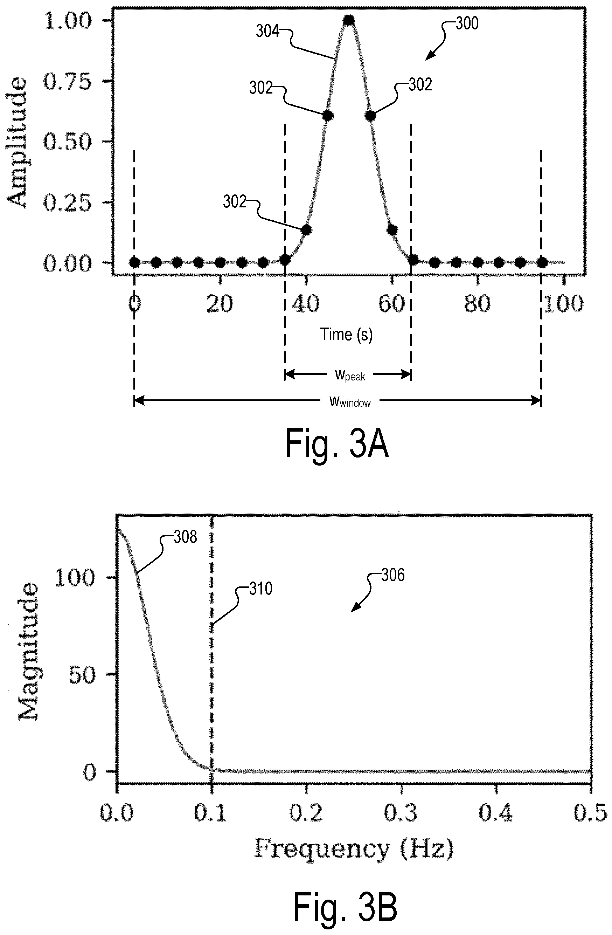

A plurality of acquisitions for a selected m/z may be acquired with a sampling rate. The sampling rate for a selected m/z will now be described with reference to FIGS. 3A and 3B. FIG. 3A shows a portion of an illustrative elution profile 300 (indicated by the solid line curve) of a selected m/z. Elution profile 300 is generated from data acquired by the mass spectrometer, such as a plurality of MS2 acquisitions. Elution profile 300 plots intensity amplitude (arbitrary units) as a function of time. Time is generally measured beginning from an initialization event, such as injection of the sample to the separation system. As shown in FIG. 3A, elution profile 300 includes a plurality of acquisition points 302, each obtained by a distinct acquisition. As analytes elute from the separation system, the detected intensity of ions produced from the analytes form an elution peak 304 having a roughly Gaussian profile. However, elution peak 304 and/or other elution peaks (not shown) in elution profile 300 may have other, non-Gaussian profiles.

As used herein, "sampling rate" refers to the number of acquisitions per unit of time for a selected m/z. In the example of FIG. 3A, the sampling rate is approximately 0.2 Hz (4 acquisitions every 20 seconds). The sampling rate may also be expressed as the number of acquisitions per elution peak. An elution peak may be defined as any detected signal above a threshold value (e.g., 6% or 10% above a baseline signal). In FIG. 3A, elution peak 304 has a peak width $w_{peak}$ of about 30 seconds (e.g., from 35 seconds to 65 seconds). The sampling rate of FIG. 3A may be expressed as six acquisitions per peak.

As used herein, "acquisition cycle period" is the duration of time between sequential acquisitions (e.g., between sequential acquisition points 302) in the elution profile of a selected m/z. In the example of FIG. 3A, the acquisition cycle period is approximately 6 seconds. During an acquisition cycle period, a mass analysis (e.g., an acquisition) is performed for each of multiple different selected m/z (e.g., for each "active" target analyte), generally each with the same sampling rate. Accordingly, multiple acquisitions are performed, each for a distinct selected m/z (e.g., a distinct target analyte), during one acquisition cycle period, and this is referred to as an acquisition cycle. The acquisition cycle is repeated multiple times to generate an elution profile for each distinct selected m/z.

As used herein, "instrument speed" refers to the amount of time the mass spectrometer requires to perform one acquisition for a selected m/z. The instrument speed is generally based on characteristics and parameters of the mass spectrometer, such as mass analysis time and ion injection time and/or dwell time. The instrument speed and the acquisition cycle period determine the number of target analytes or distinct selected m/z that may be analyzed during an acquisition cycle and, hence, over the course of an experiment.

Many experiments have a sampling rate requirement. As used herein, "sampling rate requirement" refers to the minimum number of acquisitions per unit of time for each selected m/z or the minimum number of acquisitions across each elution peak for each selected m/z, as required by method parameters for a particular experiment being performed. The sampling rate requirement may be informed by, but is not necessarily the same as, the Nyquist limit. In some examples, the Nyquist limit is determined based on a frequency domain representation of the elution profile of the selected m/z. FIG. 3B shows a frequency domain representation 306 of elution profile 300. FIG. 3B may be generated from elution profile 300 in any suitable way, such as by performing a Fourier transform on elution profile 300. Frequency domain representation 306 includes a peak 308 corresponding to elution peak 304. Based on peak 308, one may determine that the highest frequency to digitally recover is 0.1 Hz, as indicated by dashed line 310. Accordingly, the Nyquist limit would be 0.2 Hz (e.g., twice the highest frequency), giving an acquisition cycle period of 6 seconds and a sampling rate of 6 acquisitions across elution peak 304. A sampling rate that matches or exceeds the Nyquist limit is presumed to generate data with sufficient precision to accurately determine peak intensity and peak area and, hence, to accurately quantitate the target analyte. It will be recognized that the Nyquist limit may be determined in other ways, and the sampling rate requirement may be different (e.g., greater than or less than) the Nyquist limit. For example, the sampling rate requirement for a particular method may be determined experimentally.

For most experiments, the sampling rate requirement is at least six acquisitions per elution peak, and in many experiments is a value between six and fifteen acquisitions per elution peak. In some examples, such as for Gaussian-shaped elution profiles, the sampling rate requirement is five acquisitions per peak. In other examples, the sampling rate requirement is six acquisitions per peak. In further examples, the sampling rate requirement is eight acquisitions per peak. In yet further examples, the sampling rate requirement is ten acquisitions per peak. As explained above, the sampling rate may also be expressed as acquisitions per unit time. Accordingly, in some examples, the sampling rate requirement is 0.25 Hz or higher. In further examples, the sampling rate requirement is 0.30 Hz or higher. In yet further examples, the sampling rate requirement is 0.40 Hz or higher. In even further examples, the sampling rate requirement is 0.50 Hz or higher.

As used herein, "acquisition window" refers to a segment of time during which a mass analysis is performed for a selected m/z (one or more active target analytes) to acquire a set of mass spectra for the selected m/z. The acquisition window is positioned across the elution peak for the selected m/z so that a plurality of acquisitions are acquired for the selected m/z. Typically, the sampling rate for the plurality of acquisitions is set to satisfy the sampling rate requirement for the selected m/z. The width of the acquisition window ("acquisition window width") is typically larger than the elution peak width for the selected m/z, such as by a factor of 2, 3, or 4, to capture data both before and after the elution peak. For instance, as shown in FIG. 3A, the selected m/z has an acquisition window width $w_{window}$ of about 95 seconds (from 0 seconds to 95 seconds). It will be understood that the acquisition window width $w_{window}$ of FIG. 3A is merely illustrative and can be any other suitable value.

As used herein, "instrument time" refers to the amount of time that would be required for the mass spectrometer to perform an acquisition cycle for all target analytes scheduled during the acquisition cycle. The instrument time depends on the number of concurrent targets in the acquisition cycle (e.g., targets scheduled for acquisition during the acquisition cycle) and the instrument speed. Generally, the number of concurrent targets scheduled for acquisition during an acquisition cycle increases as the acquisition window width increases, since a wider acquisition window may encompass additional elution peaks.

In targeted experiments, a mass analysis is performed for a fixed, known list of analytes included in a sample. Given some knowledge about the analytes' expected elution times from the separation system, an acquisition schedule is created that specifies which analytes the mass spectrometer will target for mass analysis at which time during the experiment (referred to as "target analytes"). For chromatographic separation applications, an analyte's elution time refers to retention time, which is generally measured as the period of time between injection of the sample into the mobile phase and the relative intensity peak maximum after chromatographic separation. For capillary electrophoresis applications, in which analytes are not retained but instead continuously migrate, an analyte's elution time refers to migration time. Migration time is generally measured as the period of time taken for an analyte to migrate from the beginning of the capillary to a detection location. For ion mobility separations, an analyte's elution time refers to drift time of the analyte through a buffer gas, which may take place either in-space (e.g. a drift tube) or in-time (e.g. a trapped ion mobility cell).

Due to time-dependent variations in the separation system properties, such as solvent composition and stationary phase condition in LC separation systems, elution times can be variable and shift during the run from the expected elution time. The phenomenon of changing elution times is referred to as elution time drift. Various techniques have been developed to address elution time drift and adjust the acquisition schedule in real-time during an experiment, which techniques are referred to as elution time drift correction. Some techniques involve the measurement of reference compounds and the real-time update of the target scheduling windows. For example, a set of standard compounds with reference elution times may be spiked into the sample. Observation of the standards at a new elution time allows the scheduled acquisition windows to be updated to account for any elution time drift. Another technique associates target analytes with specific, high-intensity analytes or standards. Observation of a standard activates the acquisition window of the associated targets. Another technique, referred to as the elution time order technique, determines a ranked elution order of all target analytes. Observation of a specific target analyte activates the acquisition window of target analytes nearby in the ranking. In another technique, referred to as Sure-Quant (developed by Thermo Fisher Scientific (Waltham, MA)), a set of heavy-labeled standards are spiked into a sample. When a specific heavy standard is detected in an MS querying mode, the mass spectrometer acquires data for heavy and endogenous target analytes in a quantitative mode.

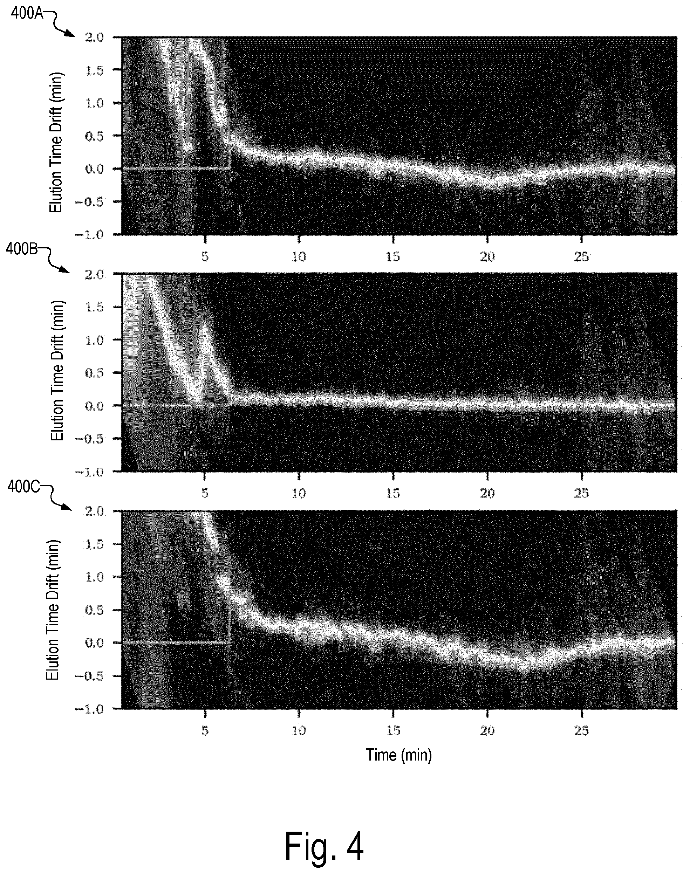

Another technique, also developed by Thermo Fisher Scientific, estimates elution time drift and updates targeted acquisition windows based on a cross-correlation of real-time mass spectra data with reference mass spectra data without regard for analyte identity. FIG. 4 shows three illustrative heat maps 400A, 400B, and 400C that represent the cross-correlation of real-time mass spectra data with reference mass spectra data for three different experiments performed in close succession for a set of 2,972 target peptides. Lighter regions of the heat maps 400 represent higher correlation. Deviations of the maximum correlation from the Y-axis zero denote elution time drift with respect to the reference mass spectra data.

As shown in FIG. 4, the largest differences between the data sets represented by heat maps 400A, 400B, and 400C are at the beginning of the experiment (e.g., from 0 to about 7 minutes) when few target analytes are entering the mass spectrometer. These early elution time differences can be problematic for any type of scheduled targeted mass spectrometry experiment, even for one with real-time elution time drift correction, because there may be insufficient data to use for elution time drift correction. These regions of low analyte concentration and insufficient data for elution time drift correction may also arise at other times during the experiment.

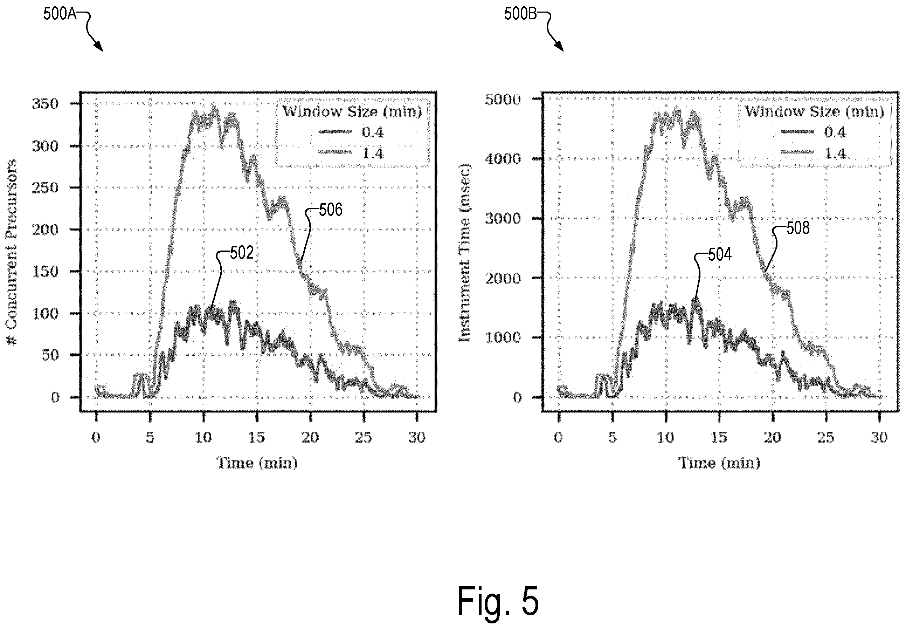

A simple solution to the problem of insufficient data for elution time drift correction includes increasing the scheduled acquisition window widths for all target analytes in the targeted assay. However, this approach is unnecessarily overbroad and requires a significant sacrifice in assay capacity, because wider acquisition windows reduce the total number of target analytes that can be measured in an assay, as will be explained with reference to FIG. 5.

FIG. 5 shows a graph 500A that plots the number of concurrent precursor ions as a function of time and a graph 500B that plots the instrument time required to mass analyze all concurrent precursor ions during an acquisition cycle for the targeted assay of FIG. 4. Given an instrument speed of about 16.7 milliseconds (ms) and a fixed acquisition window width of 0.4 minutes, the maximum number of concurrent precursor ions is about 100, as shown by curve 502 in graph 500A, and the instrument time required to mass analyze the maximum of 100 precursor ions is 1,670 ms, as shown by curve 504 in graph 500B. Increasing the acquisition window width from 0.4 minutes to 1.4 minutes increases the maximum number of concurrent precursors to about 350, as shown by curve 506 in graph 500A, with a corresponding increase in the required instrument time to analyze all precursor ions to almost 5,000 ms, as shown by curve 508 in graph 500B. Given that the assay capacity is limited by the acquisition cycle period (which is based on the elution peak width and the sampling rate requirement) and the instrument speed, data quality would have to be sacrificed by acquiring 3.3x fewer points per elution peak, or assay capacity would have to be sacrificed by reducing the number of target peptides in the assay by 3.3x from 2,972 to about 900. And yet, even a 1.4 minute acquisition window width may not be wide enough for some of the highly variable early eluting peptides. For these reasons, a global acquisition window width adjustment is not preferable.

To address these problems, the acquisition schedule for a targeted assay specifies a dynamic acquisition window width. A dynamic acquisition window width optimizes the acquisition window width based on the acquisition cycle period for the targeted assay. For example, the acquisition window width for one or more target analytes is maximized while maintaining the instrument time to mass analyze all active target analytes at any point in time during the assay less than or equal to the acquisition cycle period for the assay. The improved methods reduce problems during periods of low analyte concentration, such as at the start and end of targeted assays. Optimization of acquisition window widths for targeted mass spectrometry, and methods of performing targeted mass spectrometry with an optimized acquisition window width, will be described below in more detail.

As used herein, "optimize" and its variants means to seek an improved or optimum solution among a set of possible solutions, although the best solution may not necessarily be obtained, such as when an optimization process is terminated prior to finding the best solution, when multiple solutions exist that satisfy predefined criteria, when a solution satisfies minimum criteria, or when a selected optimization technique is unable to converge on the best solution. Similarly, as used herein an "optimum" parameter (e.g., a "maximum" or "minimum" value of a parameter) means the solution obtained as the result of performing an optimization process, and thus may not necessarily be the absolute extreme value of the parameter (e.g., the absolute maximum or minimum), but still adjusts the parameter and results in an improvement.

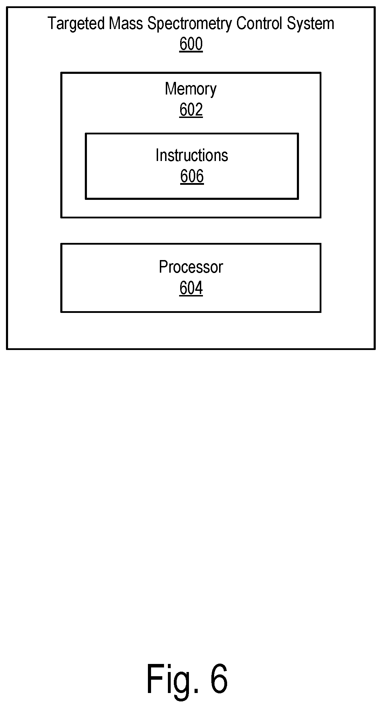

One or more operations associated with optimizing the acquisition window width for targeted mass spectrometry may be performed by a targeted MS control system in conjunction with an MS system (e.g., LC-MS system 100, a GC-MS system, or a CE-MS system). The targeted MS control system may control and/or perform one or more operations described herein. FIG. 6 shows a functional diagram of an illustrative targeted MS control system 600 ("system 600"). System 600 may be implemented entirely or in part by an MS system, such as LC-MS system 100 (e.g., by controller 106 and/or controller 206). Alternatively, system 600 may be implemented separately from the MS system (e.g., a remote computing system or server separate from but communicatively coupled to controller 106 and/or controller 206 of LC-MS system 100).

System 600 may include, without limitation, a memory 602 and a processor 604 selectively and communicatively coupled to one another. Memory 602 and processor 604 may each include or be implemented by hardware and/or software components (e.g., processors, memories, communication interfaces, instructions stored in memory for execution by the processors, etc.). Memory 602 and processor 604 may be distributed between multiple devices and/or multiple locations as may serve a particular implementation.

Memory 602 may maintain (e.g., store) executable data used by processor 604 to perform any of the operations described herein. For example, memory 602 may store instructions 606 that may be executed by processor 604 to perform any of the operations described herein. Instructions 606 may be implemented by any suitable application, software, code, and/or other executable data instance. Memory 602 may also maintain any data acquired, received, generated, managed, used, and/or transmitted by processor 604. For example, memory 602 may maintain LC-MS data, such as an acquisition schedule as described in detail below.

Processor 604 is configured to perform (e.g., execute instructions 606 stored in memory 602 to perform) various processing operations described herein. It will be recognized that the operations and examples described herein are merely illustrative of the many different types of operations that may be performed by processor 604. In the description herein, any references to operations performed by system 600 may be understood to be performed by processor 604 of system 600. Furthermore, in the description herein, any operations performed by system 600 may be understood to include system 600 directing, commanding, or instructing another system or device to perform the operations.

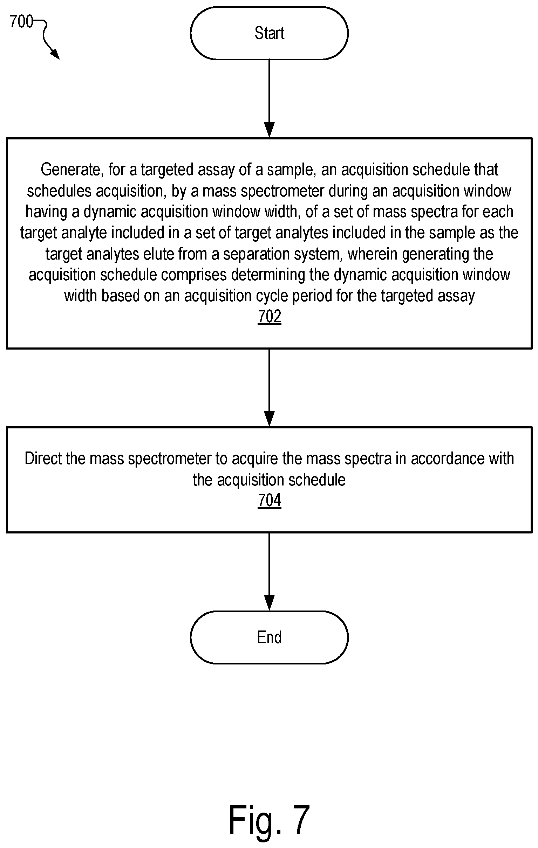

FIG. 7 shows an illustrative method 700 of performing targeted mass spectrometry with optimized acquisition window widths. While FIG. 7 shows illustrative operations according to one embodiment, other embodiments may omit, add to, reorder, and/or modify any of the operations shown in FIG. 7. One or more of the operations shown in FIG. 7 may be performed by LC-MS system 100 and/or system 600, any components included therein, and/or any implementations thereof (e.g., mass spectrometer 104, one or more components of mass spectrometer 104, and/or a remote computing system separate from but communicatively coupled to mass spectrometer 104).

At operation 702, an acquisition schedule is generated for a targeted assay. The acquisition schedule schedules acquisition, by a mass spectrometer during an acquisition window having a dynamic acquisition window width, of a set of mass spectra for each target analyte included in a set of target analytes included in the sample as the target analytes elute from a separation system. Generating the acquisition schedule includes determining the dynamic acquisition window width based on an acquisition cycle period for the targeted assay. Operation 702 will be described below in more detail.

At operation 704, the mass spectrometer is directed to acquire the set of mass spectra for each target analyte in accordance with the acquisition schedule.

Various illustrative examples of performing operation 702 will now be described. A sample typically includes many more potential target analytes than can be mass analyzed at some points during a targeted assay, based on the sampling rate requirement and the instrument speed for the assay. Accordingly, the set of target analytes is a set of analytes that have been selected from a list of potential target analytes included in the sample as targets for mass analysis. The set of target analytes may be selected in any suitable way. In some examples, the set of target analytes is selected based on the load balancing technique described in U.S. Patent Application No. 18/668,638 filed May 20, 2024.

The dynamic acquisition window width for the targeted assay is determined based on the acquisition cycle period for the assay. The acquisition cycle period is based on the sampling rate requirement for the targeted assay and a fixed or time-varying elution peak width for the assay.

The sampling rate requirement may be specified by method parameters for the particular experiment. For instance, the method parameters may specify a sampling rate requirement of 6 acquisitions across each peak. The method parameters may be accessed from local storage (e.g., memory 602), from a remote computing system, or from user input provided by a user.

The elution peak width for the targeted assay is determined based on elution peak width data representative of the expected elution times for analytes included in a list of known analytes included in the sample. In some examples, the elution peak width data is accessed from published data, which may be accessed, for example, from local storage (e.g., memory 602) or from a remote computing system. In other examples, the elution peak width data is generated by performing a characterization analysis of the sample prior to operation 702. In some examples, the characterization analysis is a data-dependent acquisition (DDA) analysis of the sample. In alternative examples, the characterization analysis includes a set of multiple, narrow isolation window data-independent acquisition (DIA) experiments that together span the m/z range of interest. Illustrative examples of performing multiple, narrow isolation window DIA experiments to characterize a sample are described in U.S. Patent Application No. 18/668,638.

Based on the sampling rate requirement and the elution peak width data, the acquisition cycle period can be calculated. For example, given a sampling rate requirement of 8 acquisitions across each elution peak and an elution peak width of 10 seconds, the acquisition cycle period is 1.25 seconds.

In some examples, the acquisition cycle period is fixed (e.g., constant) throughout the experiment. For example, the elution peak width for the assay may be determined as the mean, median, maximum, minimum, weighted mean, etc., of the elution peak widths of the analytes included in the sample or the set of target analytes.

In other examples, the acquisition cycle period is dynamic (e.g., varies over time), such as when the elution peak widths vary over time. A time-varying acquisition cycle period may be determined in any suitable way, including in any way described in U.S. Patent Application No. 18/668,638, filed May 20, 2024.

A dynamic acquisition window width based on the acquisition cycle period for the targeted assay varies over time during the assay and satisfies an acquisition cycle period constraint. The maximum width of the acquisition window that still allows acquisition of a set of mass spectra for all scheduled target analytes at the required sampling rate is constrained by the acquisition cycle period for the assay. In some examples, the acquisition cycle period constraint requires that a maximum instrument time ratio for an assay is less than or equal to a threshold ratio value. The threshold ratio value is less than or equal to one. For example, the threshold ratio value may be 1.0, 0.99, 0.97, 0.95, or any other suitable value.

An instrument time ratio is the ratio of the instrument time required to perform an acquisition cycle at a particular point in time during an assay (e.g., during a particular acquisition window) to the acquisition cycle period at that particular point in time. As a targeted assay includes multiple distinct acquisition windows, the maximum instrument time ratio is the largest instrument time ratio for the assay.

In some examples, such as where the acquisition cycle period is fixed throughout the targeted assay, the maximum instrument time ratio may be determined as the ratio of the maximum instrument time required to perform an acquisition cycle during the scheduled assay to the acquisition cycle period for the assay. For example, the acquisition cycle period constraint is satisfied (e.g., the maximum instrument time ratio is less than or equal to the threshold ratio value) when the acquisition window width is set for a subset of one or more target analytes such that the maximum instrument time required to perform an acquisition cycle during the scheduled assay does not exceed the acquisition cycle period.

In other examples, such as where the acquisition cycle period is dynamic (e.g., changes over time), the instrument time ratio is determined for each acquisition window so that the maximum instrument time ratio can be identified. The acquisition cycle period constraint is satisfied (e.g., the maximum instrument time ratio is less than or equal to the threshold ratio value) when the acquisition window width is set for a subset of one or more target analytes such that, at all times during the scheduled assay, the acquisition cycle period is not exceeded by the instrument time required to perform an acquisition cycle.

In some examples, the dynamic acquisition window width is determined on a per-target basis, wherein an acquisition window width is individually determined for each target analyte based on the acquisition cycle period for the targeted assay. In other examples, the dynamic acquisition window width is determined on a group basis, wherein the set of target analytes is divided into a plurality of groups of multiple target analytes each and a single acquisition window width is determined for each respective group of multiple target analytes. The set of target analytes may be divided into groups of target analytes in any suitable way. In some examples, the set of target analytes are divided into groups of target analytes based on an estimated elution time of each target analyte. For example, groups of target analytes may be defined based on overlapping elution times or based on elution during pre-defined or user-defined time segments (e.g., one-minute segments, two-minute segments, etc.).

The methods and concepts described herein apply equally to individual target analytes as well as to groups of multiple target analytes. Accordingly, the term "subset of one or more target analytes" refers to both individual target analytes as well as groups of multiple target analytes.

A dynamic acquisition window width based on the acquisition cycle period may be determined in any suitable way. In some examples, the acquisition window width for all scheduled target analytes is initially set to an acquisition window width default value such that the acquisition cycle period constraint is satisfied (e.g., the maximum instrument time ratio is less than or equal to the threshold ratio value). The default acquisition window width may be determined in any suitable way, such as based on a predefined value (e.g., 0.1 minutes, 0.2 minutes, 0.3 minutes, etc.), based on method parameters for the targeted assay, based on or during a load balancing step to determine the set of target analytes, and/or based on user input. The acquisition window width for a subset of one or more target analytes is then increased such that, after increasing the acquisition window width of the subset of one or more target analytes, the acquisition cycle period constraint is satisfied (e.g., the maximum instrument time ratio is less than or equal to the threshold ratio value).

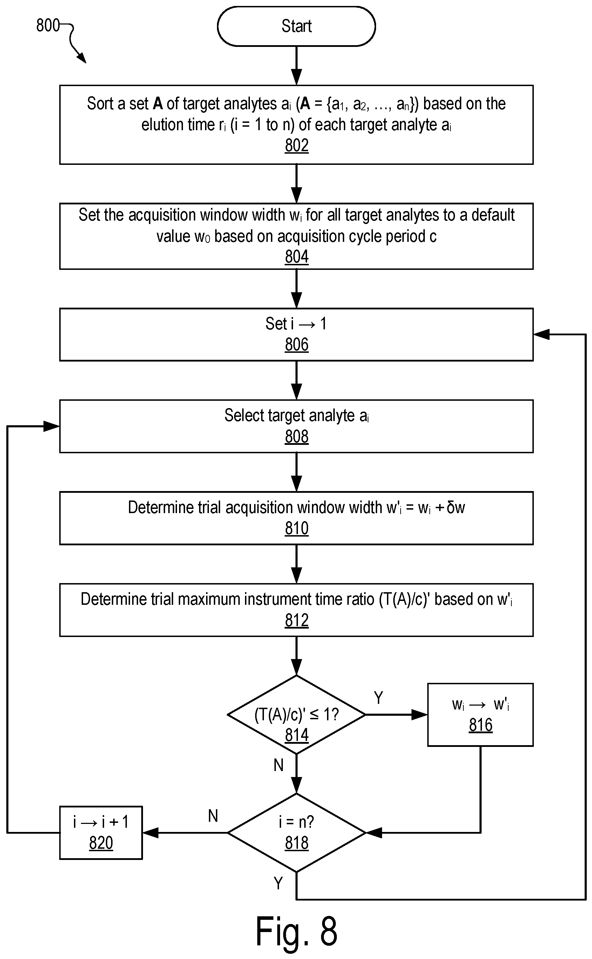

In some examples, the acquisition window width for the subset of one or more target analytes is increased iteratively, in turn, in order of increasing estimated elution time, as will now be described with reference to FIG. 8. FIG. 8 shows an illustrative method 800 of determining a dynamic acquisition window width. While FIG. 8 shows illustrative operations according to one embodiment, other embodiments may omit, add to, reorder, and/or modify any of the operations shown in FIG. 8. One or more of the operations shown in FIG. 8 may be performed by LC-MS system 100 and/or system 600, any components included therein, and/or any implementations thereof (e.g., mass spectrometer 104, one or more components of mass spectrometer 104, and/or a remote computing system separate from but communicatively coupled to mass spectrometer 104).

At operation 802, a set **A** of n target analytes is sorted based on an estimated elution time (e.g., from lowest elution time to highest elution time). The sorted set **A** is a set of n target analytes $a_i$ where i ranges from 1 to n ($\mathbf{A} = \{a_1, a_2, ..., a_n\}$) for a scheduled assay having acquisition cycle period c. Acquisition cycle period c may be determined as described herein based on a sampling rate requirement for the assay and an elution peak width for the assay. Each target analyte $a_i$ has an estimated elution time $r_i$, which may be determined as described herein.

At operation 804, the acquisition window width $w_i$ for all target analytes in set A is set to a default value $w_0$ such that the acquisition cycle period constraint is satisfied (e.g., the maximum ratio of instrument time T(A) to the acquisition cycle period c (max(T(A)/c)) at all times during the assay is less than or equal to one (or some other threshold ratio value)). The acquisition window width $w_i$ is a segment of time during which the mass spectrometer acquires mass spectra data for the target analyte $a_i$. The acquisition window period $p_i$ for a target analyte $a_i$ may be defined as:

$$p_i \in \left( r_i - \frac{w_i}{2} \right) \leq$$

$$t \leq \left( r_i + \frac{w_i}{2} \right).$$

At operation 806, the process for determination of the acquisition window width $w_i$ for target analytes is initialized by setting i to 1 so that the first target analyte in the sorted set **A** is considered first. If set **A** is sorted in order of increasing elution time, the target analyte $a_1$ will have the shortest expected elution time.

At operation 808, target analyte $a_i$ is selected for processing.

At operation 810, a trial acquisition window width $w'_i$ for the selected target analyte $a_i$ is increased by an acquisition window width increment $\delta w$. The increment $\delta w$ may be any suitable value. In some examples, increment $\delta w$ is predefined, set by a user, or set as a fraction (e.g., 6%, 10%, 15%, 20%, 25%, etc.) of the default value $w_0$.

At operation 812, a trial maximum instrument time ratio max(T(A)/c)' is determined. The trial maximum instrument time ratio max(T(A)/c)' is determined based on the trial acquisition window width $w'_i$ for the selected target analyte $a_i$, the current acquisition window width $w_i$ for all other target analytes, and the instrument speed.

At operation 814, it is determined if the trial maximum instrument time ratio max(T(A)/c)' is less than or equal to one. If the trial maximum instrument time ratio max(T(A)/c)' is less than or equal to one, then the incremental increase of the acquisition window width $w_i$ of the selected target analyte $a_i$ would not make the acquisition window width too large, and the acquisition cycle period c would be sufficient to mass analyze all target analytes within the assay. Processing of method 800 then continues to operation 816.

At operation 816, the acquisition window width $w_i$ for the selected target analyte $a_i$ is changed to the trial acquisition window width $w'_i$ for the selected target analyte $a_i$. Processing then continues to operation 818.

At operation 814, if the trial maximum instrument time ratio max(T(A)/c)' is greater than one, then the incremental increase of the acquisition window width $w_i$ of the selected target analyte $a_i$ would make the acquisition window width too large, resulting in too many target analytes to be mass analyzed within the acquisition cycle period c. Accordingly, the trial acquisition window width $w'_i$ for the selected target analyte $a_i$ is discarded and the acquisition window width $w_i$ for the selected target analyte $a_i$ remains unchanged. Processing of method 800 then continues to operation 818.

At operation 818, it is determined whether the selected target analyte $a_i$ is the last target analyte within set **A** (e.g., whether i = n). If the selected target analyte $a_i$ is not the last target analyte (i ≠ n), processing continues to operation 820.

At operation 820, i is increased by +1 and processing returns to operation 808 to select the next target analyte $a_i$ in set **A**.

At operation 818, if the selected target analyte $a_i$ is the last target analyte (i = n), processing returns to operation 806 to initialize i and perform another iteration comprising operations 808 to 820. This iterative process may be performed until the acquisition window width of no target analyte $a_i$ can be increased. Additionally or alternatively, the iterative process may be capped at a maximum number of iterations (e.g., 3, 6, 10, 20, etc.).

Various modifications may be made to method 800. In some examples, instead of incrementally increasing the acquisition window width on a per-target basis (e.g., for individual target analytes), the acquisition window width is incrementally increased for a group of multiple target analytes. For example, at operation 808, a group of target analytes may be selected and, at operation 810, the acquisition window width of each target analyte in the group may be increased by the increment $\delta w$. Accordingly, method 800 may be performed for a subset of one or more target analytes (e.g., for target analytes on a per-target basis or for groups of target analytes on a per-group basis).

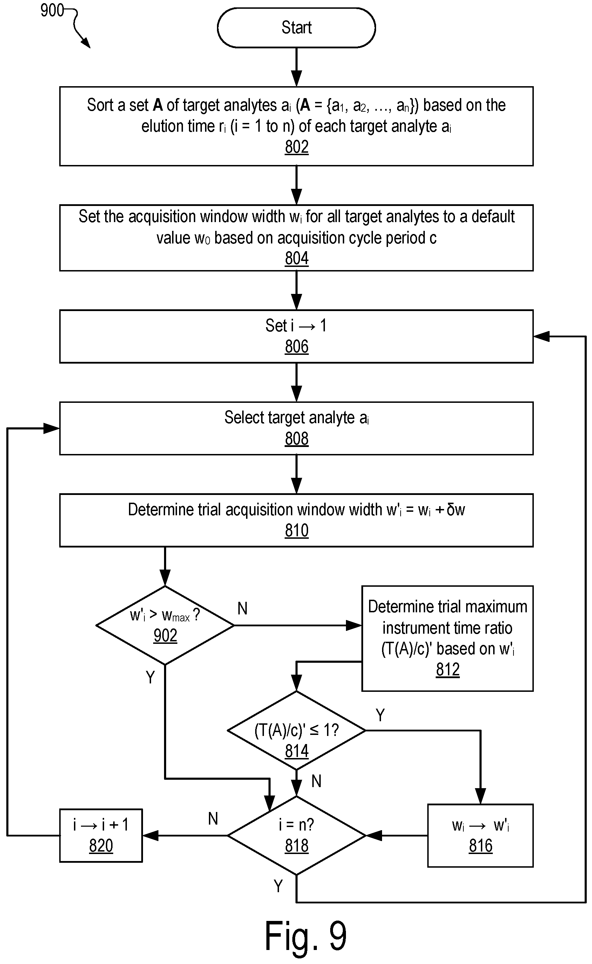

In further examples, the trial acquisition window width $w'_i$ may be capped at a maximum value. FIG. 9 shows an illustrative method 900 of performing operation 702 to determine a dynamic acquisition window width. Method 900 is similar to method 800 except that method 900 includes a maximum width check procedure 902 after operation 810. At operation 902, it is determined if the trial acquisition window width $w'_i$ exceeds a maximum acquisition window width value $w_{max}$. In some examples, maximum acquisition window width value $w_{max}$ is a factor (e.g., 2x, 3x, 4x, 10x, 15x, etc.) of default value $w_0$. In other examples, maximum acquisition window width value $w_{max}$ is a predefined width value, such as 2 minutes, 3, minutes, 4 minutes, 5 minutes, etc. The maximum acquisition window width value $w_{max}$ is chosen so that the acquisition window width $w_i$ does not become unreasonably large, which may limit the maximum injection time and thus limit the assay's lower limits of quantification.

In some examples, the maximum acquisition window width $w_{max}$ varies with time. For example, the maximum acquisition window width $w_{max}$ may be larger during periods of low target analyte concentration, such as at the beginning and/or end of an elution run, and smaller during periods of high target analyte concentration, such as during the middle of an elution run. A relatively large acquisition window width during periods of high analyte concentration is often not necessary because there is often sufficient data for elution time drift correction. Moreover, a smaller maximum acquisition window width $w_{max}$ during periods of high analyte concentration prevents the injection time or dwell time for each acquisition from becoming too small, which would result in a decrease in sensitivity. On the other hand, periods of low analyte concentration can have a larger maximum acquisition window width $w_{max}$ without a significant decrease in injection time or dwell time and a corresponding decrease in sensitivity. In some examples, the time-varying maximum acquisition window width $w_{max}$ is determined based on the estimated elution time of each target analyte or group of target analytes and/or or based on the estimated number of concurrent precursors at various times or time segments during the elution run. In further examples, the time-varying maximum acquisition window width $w_{max}$ is a function of time (e.g., a linear function, a piecewise function, or a second or higher order polynomial function).

If the trial acquisition window width $w'_i$ does not exceed maximum acquisition window width value $w_{max}$, processing continues to operation 812. If the trial acquisition window width $w'_i$ exceeds maximum acquisition window width value $w_{max}$, the trial acquisition window width $w'_i$ for the selected target analyte $a_i$ is discarded and the acquisition window width $w_i$ for the selected target analyte $a_i$ remains unchanged. Processing of method 900 then continues to operation 818.

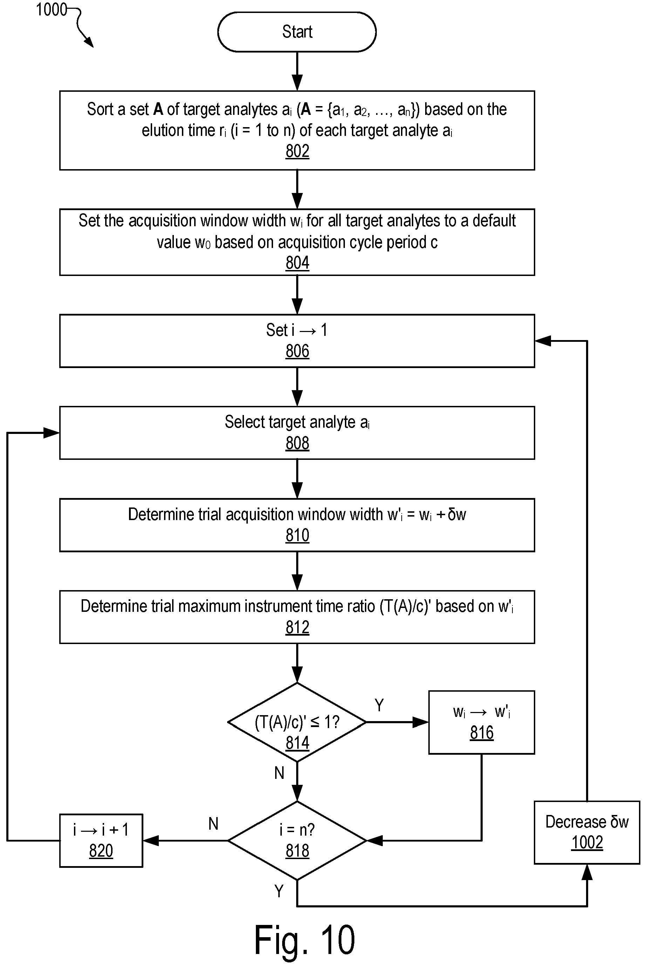

In other modifications of method 800, the increment $\delta w$ may be decreased for successive iterations. FIG. 10 shows an illustrative method 1000 of performing operation 702 to determine a dynamic acquisition window width. Method 1000 is similar to method 800 except that method 1000 includes an operation 1002 after operation 818. At operation 818, if the selected target analyte $a_i$ is the last target analyte (i = n), processing continues to operation 1002. At operation 1002, the increment $\delta w$ is decreased, such as by a step decrease (e.g., 1 ms, 3 ms, 6 ms, 20 ms, 60 ms, 100 ms) or by a fraction of the current increment $\delta w$ or initial increment $\delta w_0$ (e.g., one-half, one-third, one-fourth, etc.). Processing then returns to operation 806 to re-initialize i and perform another iteration comprising operations 808 to 820 and 1002.

While FIG. 10 shows that the increment $\delta w$ is decreased with each successive iteration, increment $\delta w$ can be decreased at any other frequency, such as every other iteration, every third iteration, every fourth iteration, etc. Furthermore, it will be recognized that method 900 and method 1000 can be combined (e.g., by including both operations 902 and 1002 in the same method).

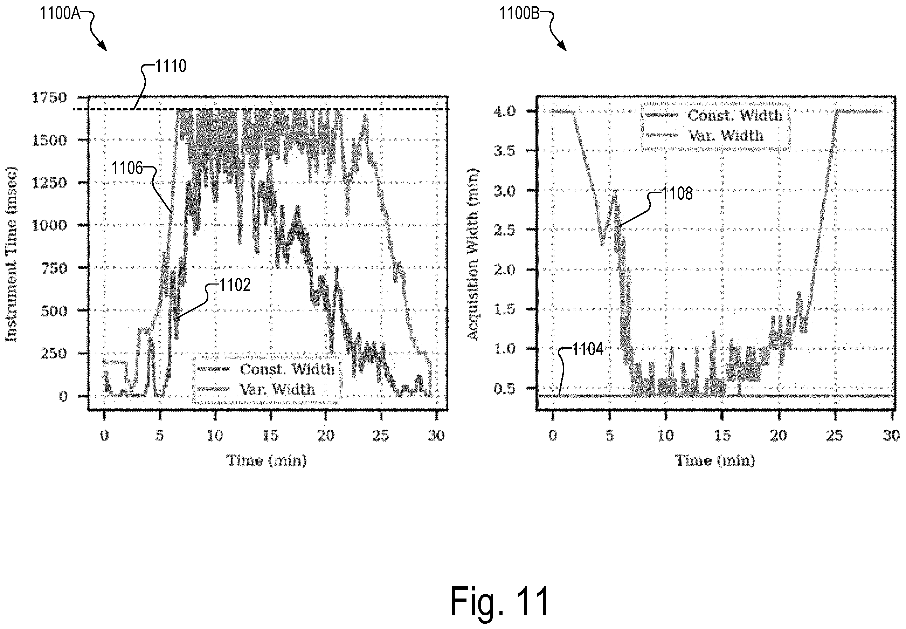

To illustrate the acquisition window optimization technique, an illustrative example is considered with the same set of 2,972 target peptides represented in FIGS. 4 and 5. FIG. 11 shows a graph 1100A that plots instrument time as a function of elapsed time and a graph 1100B that plots acquisition window width as a function of elapsed time. Data obtained using a fixed acquisition window width of 0.4 minutes is represented by curve 1102 in graph 1100A and curve 1104 in graph 1100B. Data obtained using a variable acquisition window width is represented by curve 1106 in graph 1100A and curve 1108 in graph 1100B. The variable acquisition window width is determined by setting a maximum width factor at 10, setting the increment $\delta w$ at 0.2, and performing 5 iterations. After determining the acquisition window width in this manner, the acquisition window widths are no longer constant but have the values represented by curve 1108 in graph 1100B. Because there are fewer analytes eluting at early and late stages of the assay, the acquisition window widths are allowed to expand from 0.4 minutes up to a maximum of 4 minutes (based on the maximum width factor of 10). As shown by curve 1106 in graph 1100A, the instrument time for the dynamic acquisition window width is always less than the acquisition cycle period of 1,670 ms (represented by dashed line 1110).

The maximum acquisition window width of 4.0 minutes in this example compensates for much of the elution time variability observed in FIGS. 4 and 5, where the early elution time drifts are on the order of 2 minutes. The technique neatly solves the problem of how to increase acquisition window widths in regions where this is possible, which happens to be early and late in the assay where elution time drift correction algorithms may struggle to perform. The middle portions of the assay where many target analyte elutes and where there is typically more information for performing elution time drift correction do not significantly increase their acquisition window widths.

In certain embodiments, one or more of the systems, components, and/or processes described herein may be implemented and/or performed by one or more appropriately configured computing devices. To this end, one or more of the systems and/or components described above may include or be implemented by any computer hardware and/or computer-implemented instructions (e.g., software) embodied on at least one non-transitory computer-readable medium configured to perform one or more of the processes described herein. In particular, system components may be implemented on one physical computing device or may be implemented on more than one physical computing device. Accordingly, system components may include any number of computing devices, and may employ any of a number of computer operating systems.

In certain embodiments, one or more of the processes described herein may be implemented at least in part as instructions embodied in a non-transitory computer-readable medium and executable by one or more computing devices. In general, a processor (e.g., a microprocessor) receives instructions, from a non-transitory computer-readable medium, (e.g., a memory, etc.), and executes those instructions, thereby performing one or more processes, including one or more of the processes described herein. Such instructions may be stored and/or transmitted using any of a variety of known computer-readable media.

A computer-readable medium (also referred to as a processor-readable medium) includes any non-transitory medium that participates in providing data (e.g., instructions) that may be read by a computer (e.g., by a processor of a computer). Such a medium may take many forms, including, but not limited to, non-volatile media, and/or volatile media. Non-volatile media may include, for example, optical or magnetic disks and other persistent memory. Volatile media may include, for example, dynamic random access memory ("DRAM"), which typically constitutes a main memory. Common forms of computer-readable media include, for example, a disk, hard disk, magnetic tape, any other magnetic medium, a compact disc read-only memory ("CD-ROM"), a digital video disc ("DVD"), any other optical medium, random access memory ("RAM"), programmable read-only memory ("PROM"), electrically erasable programmable read-only memory ("EPROM"), FLASH-EEPROM, any other memory chip or cartridge, or any other tangible medium from which a computer can read.

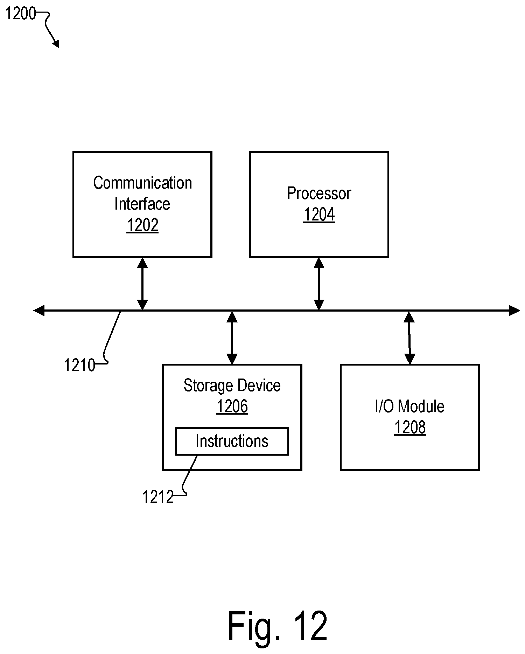

FIG. 12 shows an illustrative computing device 1200 that may be specifically configured to perform one or more of the processes described herein. As shown in FIG. 12, computing device 1200 may include a communication interface 1202, a processor 1204, a storage device 1206, and an input/output ("I/O") module 1208 communicatively connected one to another via a communication infrastructure 1210. While an illustrative computing device 1200 is shown in FIG. 12, the components illustrated in FIG. 12 are not intended to be limiting. Additional or alternative components may be used in other embodiments. Components of computing device 1200 shown in FIG. 12 will now be described in additional detail.

Communication interface 1202 may be configured to communicate with one or more computing devices. Examples of communication interface 1202 include, without limitation, a wired network interface (such as a network interface card), a wireless network interface (such as a wireless network interface card), a modem, an audio/video connection, and any other suitable interface.

Processor 1204 generally represents any type or form of processing unit capable of processing data and/or interpreting, executing, and/or directing execution of one or more of the instructions, processes, and/or operations described herein. Processor 1204 may perform operations by executing computer-executable instructions 1212 (e.g., an application, software, code, and/or other executable data instance) stored in storage device 1206.

Storage device 1206 may include one or more data storage media, devices, or configurations and may employ any type, form, and combination of data storage media and/or device. For example, storage device 1206 may include, but is not limited to, any combination of the non-volatile media and/or volatile media described herein. Electronic data, including data described herein, may be temporarily and/or permanently stored in storage device 1206. For example, data representative of computer-executable instructions 1212 configured to direct processor 1204 to perform any of the operations described herein may be stored within storage device 1206. In some examples, data may be arranged in one or more databases residing within storage device 1206.

I/O module 1208 may include one or more I/O modules configured to receive user input and provide user output. One or more I/O modules may be used to receive input for a single virtual experience. I/O module 1208 may include any hardware, firmware, software, or combination thereof supportive of input and output capabilities. For example, I/O module 1208 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 1208 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 1208 is configured to provide graphical data to a display for presentation to a user. The graphical data may be representative of one or more graphical user interfaces and/or any other graphical content as may serve a particular implementation.

In some examples, any of the systems, computing devices, and/or other components described herein may be implemented by computing device 1200. For example, memory 602 may be implemented by storage device 1206, and processor 604 may be implemented by processor 1204.

It will be recognized by those of ordinary skill in the art that while, in the preceding description, various illustrative embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

Advantages and features of the present disclosure can be further described by the following examples:

Example 1. A non-transitory computer-readable medium storing instructions that, when executed, direct at least one processor of a computing device for mass spectrometry to: generate, for a targeted assay of a sample, an acquisition schedule that schedules acquisition, by a mass spectrometer during an acquisition window having a dynamic acquisition window width, of a set of mass spectra for each target analyte included in a set of target analytes included in the sample as the target analytes elute from a separation system, wherein generating the acquisition schedule comprises determining the dynamic acquisition window width based on an acquisition cycle period for the targeted assay; and direct the mass spectrometer to acquire each set of mass spectra in accordance with the acquisition schedule.

Example 2. The computer-readable medium of example 1, wherein determining the dynamic acquisition window width based on the acquisition cycle period for the targeted assay comprises: individually determining, based on the acquisition cycle period for the targeted assay, an acquisition window width for each target analyte included in the set of target analytes.

Example 3. The computer-readable medium of example 1, wherein determining the dynamic acquisition window width comprises: dividing the set of target analytes into a plurality of groups of target analytes; and determining, for each group of target analytes included in the plurality of groups of target analytes, an acquisition window width based on an acquisition cycle period for the respective group of target analytes.

Example 4. The computer-readable medium of example 3, wherein the set of target analytes is divided into the plurality of groups of target analytes based on an estimated elution time of each target analyte included in the set of target analytes.

Example 5. The computer-readable medium of example 1, wherein the acquisition cycle period for the targeted assay is fixed.

Example 6. The computer-readable medium of example 1, wherein the acquisition cycle period for the targeted assay is dynamic.

Example 7. The computer-readable medium of example 1, wherein determining the dynamic acquisition window width comprises further comprises: determining the acquisition cycle period for the targeted assay based on a sampling rate requirement for the targeted assay and a fixed or time-varying elution peak width for the targeted assay.

Example 8. The computer-readable medium of example 1, wherein determining the dynamic acquisition window width based on the acquisition cycle period for the targeted assay comprises: determining, for each subset of one or more target analytes included in the set of target analytes, an acquisition window width default value such that a maximum instrument time ratio for the targeted assay is less than or equal to a threshold ratio value, wherein: the maximum instrument time ratio for the targeted assay is a maximum ratio of instrument time to perform an acquisition cycle to the acquisition cycle period for the acquisition cycle, and the threshold ratio value is less than or equal to one (1); and increasing the acquisition window width of a subset of one or more target analytes such that, after increasing the acquisition window width of the subset of one or more target analytes, the maximum instrument time ratio for the targeted assay is less than or equal to the threshold ratio value.

Example 9. The computer-readable medium of example 8, wherein: determining the dynamic acquisition window width based on the acquisition cycle period for the targeted assay further comprises sorting the set of target analytes based on an estimated elution time of each target analyte included in the set of target analytes; and increasing the acquisition window width of the subset of one or more target analytes comprises an iterative process comprising: increasing, based on an acquisition window width increment, the acquisition window width for each subset of one or more target analytes included in a plurality of subsets of one or more target analytes, in turn in order of increasing estimated elution time.

Example 10. The computer-readable medium of example 9, wherein the acquisition window width increment decreases with successive iterations.

Example 11. The computer-readable medium of example 1, wherein determining the dynamic acquisition window width is further based on a maximum acquisition window width value.

Example 12. A method of performing targeted mass spectrometry, comprising: generating, for a targeted assay of a sample, an acquisition schedule that schedules acquisition, by a mass spectrometer during an acquisition window having a dynamic acquisition window width, of a set of mass spectra for each target analyte included in a set of target analytes included in the sample as the target analytes elute from a separation system, wherein generating the acquisition schedule comprises determining the dynamic acquisition window width based on an acquisition cycle period for the targeted assay; and directing the mass spectrometer to acquire each set of mass spectra in accordance with the acquisition schedule.

Example 13. The method of example 12, wherein determining the dynamic acquisition window width comprises further comprises: determining the acquisition cycle period for the targeted assay based on a sampling rate requirement for the targeted assay and a fixed or time-varying elution peak width for the targeted assay.

Example 14. The method of example 12, wherein determining the dynamic acquisition window width based on the acquisition cycle period for the targeted assay comprises: determining, for each subset of one or more target analytes included in the set of target analytes, an acquisition window width default value such that a maximum instrument time ratio for the targeted assay is less than or equal to a threshold ratio value, wherein: the maximum instrument time ratio for the targeted assay is a maximum ratio of instrument time to perform an acquisition cycle to the acquisition cycle period for the acquisition cycle, and the threshold ratio value is less than or equal to one (1); and increasing the acquisition window width of a subset of one or more target analytes such that, after increasing the acquisition window width of the subset of one or more target analytes, the maximum instrument time ratio for the targeted assay is less than or equal to the threshold ratio value.

Example 15. The method of example 14, wherein: determining the dynamic acquisition window width based on the acquisition cycle period for the targeted assay further comprises sorting the set of target analytes based on an estimated elution time of each target analyte included in the set of target analytes;

and increasing the acquisition window width of the subset of one or more target analytes comprises an iterative process comprising: increasing, based on an acquisition window width increment, the acquisition window width for each subset of one or more target analytes included in a plurality of subsets of one or more target analytes, in turn in order of increasing estimated elution time.

Example 16. The method of example 15, wherein the acquisition window width increment decreases with successive iterations.

Example 17. The method of example 12, wherein determining the dynamic acquisition window width is further based on a maximum acquisition window width value.

Example 18. A system for mass spectrometry, comprising: one or more processors; and memory storing executable instructions that, when executed by the one or more processors, cause a computing device to: generate, for a targeted assay of a sample, an acquisition schedule that schedules acquisition, by a mass spectrometer during an acquisition window having a dynamic acquisition window width, of a set of mass spectra for each target analyte included in a set of target analytes included in the sample as the target analytes elute from a separation system, wherein generating the acquisition schedule comprises determining the dynamic acquisition window width based on an acquisition cycle period for the targeted assay; and direct the mass spectrometer to acquire each set of mass spectra in accordance with the acquisition schedule.

Example 19. The system of example 18, wherein determining the dynamic acquisition window width based on the acquisition cycle period for the targeted assay comprises: determining, for each subset of one or more target analytes included in the set of target analytes, an acquisition window width default value such that a maximum instrument time ratio for the targeted assay is less than or equal to a threshold ratio value, wherein: the maximum instrument time ratio for the targeted assay is a maximum ratio of instrument time to perform an acquisition cycle to the acquisition cycle period for the acquisition cycle, and the threshold ratio value is less than or equal to one (1); and increasing the acquisition window width of a subset of one or more target analytes such that, after increasing the acquisition window width of the subset of one or more target analytes, the maximum instrument time ratio for the targeted assay is less than or equal to the threshold ratio value

Example 20. The system of example 18, further comprising the mass spectrometer.

**Claims**

1. A non-transitory computer-readable medium storing instructions that, when executed, direct at least one processor of a computing device for mass spectrometry to:

generate, for a targeted assay of a sample, an acquisition schedule that schedules acquisition, by a mass spectrometer during an acquisition window having a dynamic acquisition window width, of a set of mass spectra for each target analyte included in a set of target analytes included in the sample as the target analytes elute from a separation system, wherein generating the acquisition schedule comprises determining the dynamic acquisition window width based on an acquisition cycle period for the targeted assay; and

direct the mass spectrometer to acquire each set of mass spectra in accordance with the acquisition schedule.

2. The computer-readable medium of claim 1, wherein determining the dynamic acquisition window width based on the acquisition cycle period for the targeted assay comprises:
individually determining, based on the acquisition cycle period for the targeted assay, an acquisition window width for each target analyte included in the set of target analytes.

3. The computer-readable medium of claim 1, wherein determining the dynamic acquisition window width comprises:

dividing the set of target analytes into a plurality of groups of target analytes; and
determining, for each group of target analytes included in the plurality of groups of target analytes, an acquisition window width based on an acquisition cycle period for the respective group of target analytes.

4. The computer-readable medium of claim 3, wherein the set of target analytes is divided into the plurality of groups of target analytes based on an estimated elution time of each target analyte included in the set of target analytes.

5. The computer-readable medium of any one of claims 1-4, wherein the acquisition cycle period for the targeted assay is fixed.

6. The computer-readable medium of any one of claims 1-4, wherein the acquisition cycle period for the targeted assay is dynamic.

7. The computer-readable medium of any one of claims 1-6, wherein determining the dynamic acquisition window width comprises further comprises:

determining the acquisition cycle period for the targeted assay based on a sampling rate requirement for the targeted assay and a fixed or time-varying elution peak width for the targeted assay.

8. The computer-readable medium of any one of claims 1-7, wherein determining the dynamic acquisition window width based on the acquisition cycle period for the targeted assay comprises:

determining, for each subset of one or more target analytes included in the set of target analytes, an acquisition window width default value such that a maximum instrument time ratio for the targeted assay is less than or equal to a threshold ratio value, wherein:

the maximum instrument time ratio for the targeted assay is a maximum ratio of instrument time to perform an acquisition cycle to the acquisition cycle period for the acquisition cycle, and
the threshold ratio value is less than or equal to one (1); and

increasing the acquisition window width of a subset of one or more target analytes such that, after increasing the acquisition window width of the subset of one or more target analytes, the maximum instrument time ratio for the targeted assay is less than or equal to the threshold ratio value.

9. The computer-readable medium of claim 8, wherein:

determining the dynamic acquisition window width based on the acquisition cycle period for the targeted assay further comprises sorting the set of target analytes based on an estimated elution time of each target analyte included in the set of target analytes; and
increasing the acquisition window width of the subset of one or more target analytes comprises an iterative process comprising:
increasing, based on an acquisition window width increment, the acquisition window width for each subset of one or more target analytes included in a plurality of subsets of one or more target analytes, in turn in order of increasing estimated elution time.

10. The computer-readable medium of claim 9, wherein the acquisition window width increment decreases with successive iterations.

11. The computer-readable medium of any one of claims 1-10, wherein determining the dynamic acquisition window width is further based on a maximum acquisition window width value.

12. A method of performing targeted mass spectrometry, comprising:

generating, for a targeted assay of a sample, an acquisition schedule that schedules acquisition, by a mass spectrometer during an acquisition window having a dynamic acquisition window width, of a set of mass spectra for each target analyte included in a set of target analytes included in the sample as the target analytes elute from a separation system, wherein generating the acquisition schedule comprises determining the dynamic acquisition window width based on an acquisition cycle period for the targeted assay; and

directing the mass spectrometer to acquire each set of mass spectra in accordance with the acquisition schedule.

13. A system for mass spectrometry, comprising:

one or more processors; and
memory storing executable instructions that, when executed by the one or more processors, cause a computing device to:

generate, for a targeted assay of a sample, an acquisition schedule that schedules acquisition, by a mass spectrometer during an acquisition window having a dynamic acquisition window width, of a set of mass spectra for each target analyte included in a set of target analytes included in the sample as the target analytes elute from a separation system, wherein generating the acquisition schedule comprises determining the dynamic acquisition window width based on an acquisition cycle period for the targeted assay; and
direct the mass spectrometer to acquire each set of mass spectra in accordance with the acquisition schedule.

14. The system of claim 13, wherein determining the dynamic acquisition window width based on the acquisition cycle period for the targeted assay comprises:

determining, for each subset of one or more target analytes included in the set of target analytes, an acquisition window width default value such that a maximum instrument time ratio for the targeted assay is less than or equal to a threshold ratio value, wherein:

the maximum instrument time ratio for the targeted assay is a maximum ratio of instrument time to perform an acquisition cycle to the acquisition cycle period for the acquisition cycle, and
the threshold ratio value is less than or equal to one (1); and

increasing the acquisition window width of a subset of one or more target analytes such that, after increasing the acquisition window width of the subset of one or more target analytes, the maximum instrument time ratio for the targeted assay is less than or equal to the threshold ratio value.

15. The system of any one of claims 13-14, further comprising the mass spectrometer.

100

Controller
106

Liquid Chromatograph
102

Column
110

112

Mass Spectrometer
104

Sample
108

Fig. 1

104

Controller
206

Ion Source
202

208

Mass
Analyzer
204-1

210

Collision
Cell
204-2

212

Mass
Analyzer
204-3

Fig. 2

Fig. 3A

Fig. 3B

**Fig. 4**

EP 4 657 492 A2

Fig. 5

Targeted Mass Spectrometry Control System
600

Memory
602

Instructions
606

Processor
604

# Fig. 6

700

Start

Generate, for a targeted assay of a sample, an acquisition schedule that schedules acquisition, by a mass spectrometer during an acquisition window having a dynamic acquisition window width, of a set of mass spectra for each target analyte included in a set of target analytes included in the sample as the target analytes elute from a separation system, wherein generating the acquisition schedule comprises determining the dynamic acquisition window width based on an acquisition cycle period for the targeted assay
702

Direct the mass spectrometer to acquire the mass spectra in accordance with the acquisition schedule
704

End

Fig. 7

800

Start

Sort a set **A** of target analytes $a_i$ ($A = \{a_1, a_2, ..., a_n\}$) based on the elution time $r_i$ ($i = 1$ to $n$) of each target analyte $a_i$
802

Set the acquisition window width $w_i$ for all target analytes to a default value $w_0$ based on acquisition cycle period $c$
804

Set $i \rightarrow 1$
806

Select target analyte $a_i$
808

Determine trial acquisition window width $w'_i = w_i + \delta w$
810

Determine trial maximum instrument time ratio $(T(A)/c)'$ based on $w'_i$
812

$(T(A)/c)' \leq 1$?
814

Y

$w_i \rightarrow w'_i$
816

N

$i \rightarrow i + 1$
820

N

$i = n$?
818

Y

Fig. 8

900

```
                          ┌─────────────┐
                          │    Start    │
                          └──────┬──────┘
                                 │
                                 ▼
┌─────────────────────────────────────────────────────────────┐
│ Sort a set A of target analytes aᵢ (A = {a₁, a₂, ..., aₙ})   │
│ based on the elution time rᵢ (i = 1 to n) of each target     │
│ analyte aᵢ                                                    │
│                          802                                  │
└─────────────────────────────┬───────────────────────────────┘
                              ▼
┌─────────────────────────────────────────────────────────────┐
│ Set the acquisition window width wᵢ for all target analytes  │
│ to a default value w₀ based on acquisition cycle period c    │
│                          804                                  │
└─────────────────────────────┬───────────────────────────────┘
                              ▼
┌─────────────────────────────────────────────────────────────┐
│                      Set i → 1                                │
│                          806                                  │
└─────────────────────────────┬───────────────────────────────┘
                              ▼
┌─────────────────────────────────────────────────────────────┐
│                  Select target analyte aᵢ                     │
│                          808                                  │
└─────────────────────────────┬───────────────────────────────┘
                              ▼
┌─────────────────────────────────────────────────────────────┐
│   Determine trial acquisition window width w'ᵢ = wᵢ + δw      │
│                          810                                  │
└─────────────────────────────┬───────────────────────────────┘
```

Sort a set **A** of target analytes $a_i$ (**A** $= \{a_1, a_2, ..., a_n\}$) based on the elution time $r_i$ ($i = 1$ to $n$) of each target analyte $a_i$
<u>802</u>

Set the acquisition window width $w_i$ for all target analytes to a default value $w_0$ based on acquisition cycle period $c$
<u>804</u>

Set $i \rightarrow 1$
<u>806</u>

Select target analyte $a_i$
<u>808</u>

Determine trial acquisition window width $w'_i = w_i + \delta w$
<u>810</u>

$w'_i > w_{max}$ ?
<u>902</u>

N → Determine trial maximum instrument time ratio $(T(A)/c)'$ based on $w'_i$
<u>812</u>

$(T(A)/c)' \leq 1$?
<u>814</u>

Y → $w_i \rightarrow w'_i$
<u>816</u>

N

$i = n$?
<u>818</u>

N → $i \rightarrow i + 1$
<u>820</u>

Y

Fig. 9

1000

```
         ┌─────────────┐
         │    Start    │
         └─────────────┘
```

Sort a set **A** of target analytes $a_i$ (**A** = {$a_1$, $a_2$, ..., $a_n$}) based on the elution time $r_i$ (i = 1 to n) of each target analyte $a_i$
802

Set the acquisition window width $w_i$ for all target analytes to a default value $w_0$ based on acquisition cycle period c
804

Set i → 1
806

Select target analyte $a_i$
808

Determine trial acquisition window width $w'_i = w_i + \delta w$
810

Determine trial maximum instrument time ratio $(T(A)/c)'$ based on $w'_i$
812

$(T(A)/c)' \leq 1?$
814

Y → $w_i \rightarrow w'_i$
816

N

i = n?
818

N → i → i + 1
820

Y

Decrease $\delta w$
1002

Fig. 10

Fig. 11

EP 4 657 492 A2

1200

Communication
Interface
1202

Processor
1204

1210

Storage Device
1206

Instructions

1212

I/O Module
1208

# Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 66863824

- US 668638